# EUROPEAN PATENT APPLICATION

(11) **EP 2 806 387 A1**
(43) Date of publication of application: **26.11.2014**
(21) Application number: 14169614.6
(22) Date of filing: 23.05.2014
(51) Int. Cl.: G06Q 10/10

(54) **Document translation management**

(30) Priority: 24.05.2013 GB 201309402
(71) Applicant: RWS Group Limited, Buckinghamshire SL9 9FG (GB)
(72) Inventor: Price, Alan Peter, Chalfont St Peter, Buckinghamshire SL9 9FG (GB)
(74) Representative: Martin, Philip John

(57) **Abstract**

We describe a physical document translation management computer system for scanning, tracking and archiving paper-based tasks. The physical document translation management system comprises, inter alia: a document translation workflow management computer system to track and manage translation of electronic documents; a document content management system for storing electronic source documents for translation; a network file system for temporarily storing images of incoming paper source documents for translation; a barcode printing system to print a physical barcode page including a barcode; a document imaging system to scan a paper copy of a source document for translation and save the scanned source document to the network file system; an optical character recognition (OCR) system, to perform OCR on the scanned source document to generate a searchable portable document format version of the scanned source document; and a control system. The system uses a physical link (between the electronic job ID code and the paper-based translation job), to process a paper-based translation job and provide a verification/error checking step during this processing. The verification step checks whether a job associated with the physical barcode exists in the content management system before adding a scanned version of the paper-based translation job to the system and before adding the job to an OCR queue to create a searchable version of the translation job and thereby ensures that a physical link between the system and the translation job has been formed before the job is processed. This enables the processing of the paper-based tasks by electronic workflow and content management systems, which typically only accept electronic content.

## Description

### FIELD OF THE INVENTION

This invention relates to computer systems and methods for handling physical documents, in particular for translation, in the context of systems designed to work with electronic documents.

### BACKGROUND TO THE INVENTION

Broadly speaking we will describe computer systems for scanning, tracking and archiving paper-based jobs through a traditionally electronic process. In general work flow and content management systems can only accept electronic content for addition via web-based interfaces. However the applicant receives and processes many thousands of language translation jobs per month, and although some are electronic job orders a large proportion comprises paper-based job orders with printed material as the source document. Each job has a source document and, once processed through the translation work flow, a translated document; there may also be additional supporting documents.

There is a need to be able to integrate the handling of paper-based source documents with computer systems which only work with electronic documents.

### SUMMARY OF THE INVENTION

According to a first aspect of the invention there is therefore provided a physical document translation management computer system, the system comprising: a document translation workflow management computer system to track and manage translation of electronic documents including identifying electronic source documents for translation and electronic target documents comprising translated text, allocating translation jobs, and scheduling; a document content management system coupled to said document translation workflow management computer system for storing said electronic source documents for translation and said electronic target documents; a network file system, coupled to said document translation workflow management computer system and to said document content management system, for temporarily storing images of incoming paper source documents for translation; a barcode printing system coupled to said document translation workflow management computer system to print a physical barcode page including a barcode; a document imaging system coupled to said network file system to scan a paper copy of a source document for translation and save said scanned source document to said network file system, wherein a said barcode page provides a first page of said paper copy of said source document for translation; an optical character recognition (OCR) system, coupled to said network file system, to perform OCR on a said scanned source document to generate a searchable portable document format version of said scanned source document; a control system, coupled to said document translation workflow management computer system, to said document content management system, to said network file system, and to said optical character recognition system, wherein said control system is configured to control said OCR system to load and OCR said first page of said scanned source document for translation, to read the barcode from the barcode page to determine whether said barcode matches an electronic job identification code of said document translation workflow management computer system, and to interface with said document content management system and said OCR system to add a said scanned source document into said document content management system and to convert said scanned source document into a searchable portable document format version of said scanned source document; wherein said physical document translation management computer system is configured to: create a unique electronic job identification code; create and print a barcode representing said electronic job identification code; scan a paper copy of a source document for translation using document imaging system; analyse said scanned source document bearing a said barcode on the first page to read the barcode; test said read barcode to determine whether said read barcode matches a said unique electronic job identification code; add said scanned source document to said document content management system, indexed by said unique electronic job identification code, if said read barcode matches a said unique electronic job identification code; and convert said scanned source document indexed by said unique electronic job identification code in said document content management system into a searchable portable document format version of said scanned source document using said optical character recognition system.

Broadly speaking embodiments of the computer system create a physical link (the barcode page) between an electronic identity shared between the document translation work flow management computer system and the document content management system and the paper source document and then capture an image comprising both the text of the source document and the physical link (barcode page), processing these to connect the paper source document and various electronic systems, co-ordinated by a control system.

Preferred implementations of the system also include an automatic indexing system arranged to merge the electronic source and targets documents into a single, merged document which is automatically indexed and linked to the unique electronic job identification code. Preferably the system is also configured to automatically convert additional documents for the job into a common, for example PDF (Portable Document Format) format, which are stored and similarly indexed by the electronic job identification code.

In a related aspect the invention provides a method of processing paper source documents for translation using a document translation workflow management computer system configured to handle electronic documents, the method comprising: creating a unique electronic job identification code using said document translation workflow management computer system; printing a barcode page bearing a barcode representing said electronic job identification code; providing said barcode page as a first page of a paper source document for translation; scanning said paper source document for translation; performing OCR on a first page of said scanned paper source document for translation to provide a searchable portable document format (pdf) version of said first page; reading said barcode from said searchable pdf version of said first page; checking whether there exists in said document translation workflow management computer system a unique electronic job identification code represented by said barcode; matching said scanned paper source document for translation to said electronic job identification code if said a unique electronic job identification code represented by said barcode text exists; converting all said paper source document for translation to a searchable pdf version of said paper source document for translation; and storing said searchable pdf version of said paper source document for translation and said scanned paper source document for translation in a content management system in association with said matched electronic job identification.

The invention also provides processor control code for the above-described computer systems and methods, in particular on a data carrier such as a disk, CD- or DVD-ROM, programmed memory such as read-only memory (Firmware), or on a data carrier such as an optical or electrical signal carrier. Code (and/or data) to implement embodiments of the invention may comprise source, object or executable code in a conventional programming language (interpreted or compiled) such as C, or assembly code. As the skilled person will appreciate such code and/or data may be distributed between a plurality of coupled components in communication with one another.

### BRIEF DESCRIPTION OF THE DRAWINGS

These and other aspects of the invention will now be further described, by way of example only, with reference to the accompanying figures in which:
Figure 1 shows a block diagram of a physical document translation management computer system according to an embodiment of the invention;
Figure 2 shows a flow diagram of a procedure implemented by the computer system of Figure 1;
Figures 3a and 3b show, respectively, a flow diagram of an OCR rendition procedure, and a flow diagram of a PDF conversion and rendition service; and
Figure 4 shows a flow diagram of a search system indexing procedure.

### DETAILED DESCRIPTION OF PREFERRED EMBODIMENTS

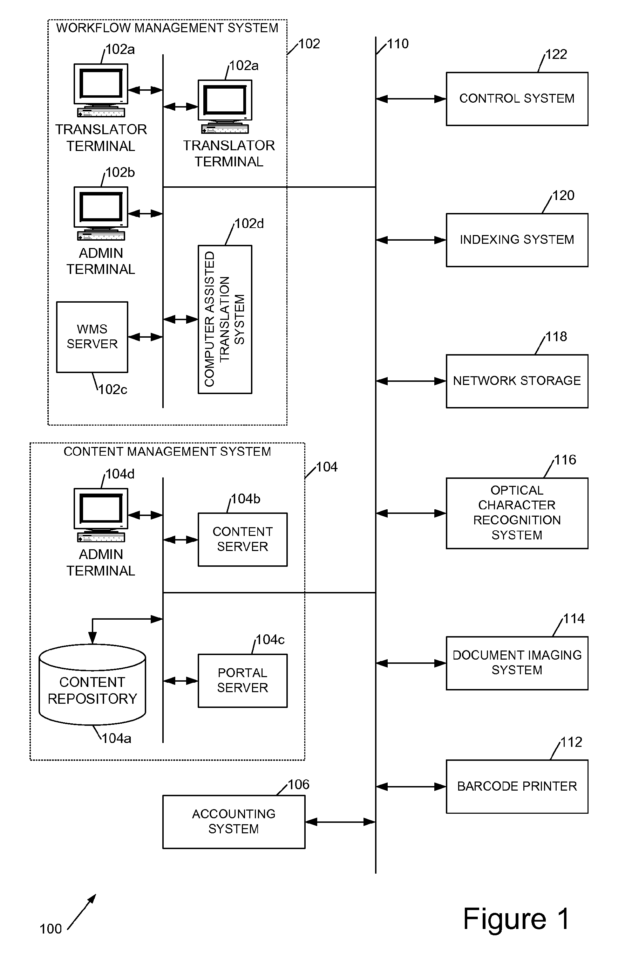

Figure 1 shows a dot diagram of a physical document translation management system [100] according to an embodiment of the invention, comprising a document translation workflow management computer system [102], a document content management system [104], and an accounting system [106] coupled by a network [110] such as a local area network. Also coupled to network [110] are a barcode printer [112], a document imaging system [114], for example comprising one or more scanners, and optical character recognition (OCR) system [116] (in embodiments from ABBYY, Russia), network storage [118], an indexing system [120] (in embodiments, an OSS, Open Source Search, SOLR™ server), and a control system [122]. The skilled person will recognise that although these have been drawn as separate entities for convenience of depiction, in a practical implementation one or more of the functions illustrated may be combined on a single computer system or distributed as illustrated or differently over multiple computer systems in communication with one another. The skilled person will appreciate that a single physical system may, in embodiments, include the functions of more than one of the systems/devices shown in Figure 1.

In embodiments the workflow management system [102] schedules language translation jobs for human translators and allows the management of job scheduling by allocating, monitoring, and rearranging translation jobs according to internal and external resource availability, capacity and the like. Each job has a unique job identifier which links to electronic media stored in the content management system [104] so that a job can be searched, tracked and indexed as the translation progresses.

In an example implementation the workflow management system comprises a plurality of translator terminals [102a], one or more administration terminals [102b], a workflow management server [102c], and a computer aided translation (CAT) system [102d]. The CAT system facilitates translation by, for example, aligning source and translated text to identify and store translation units, and analysing new documents for translation on a per client/subject basis to identify where the translation units can be found in new documents, to reduce the need for human translation, optionally employing a fuzzy match and (colour) coding the text to indicate a degree of match.

In embodiments the content management system (for example "EMC Documentum"™) comprises one or more (mirrored) databases forming a content repository [104a] which operates in conjunction with a content server [104b] and a portal server [104c] which provides a set of web service interfaces to the content, for example for saving and retrieving content objects, version control, querying the database, and other services. An administration terminal [104d] is also provided.

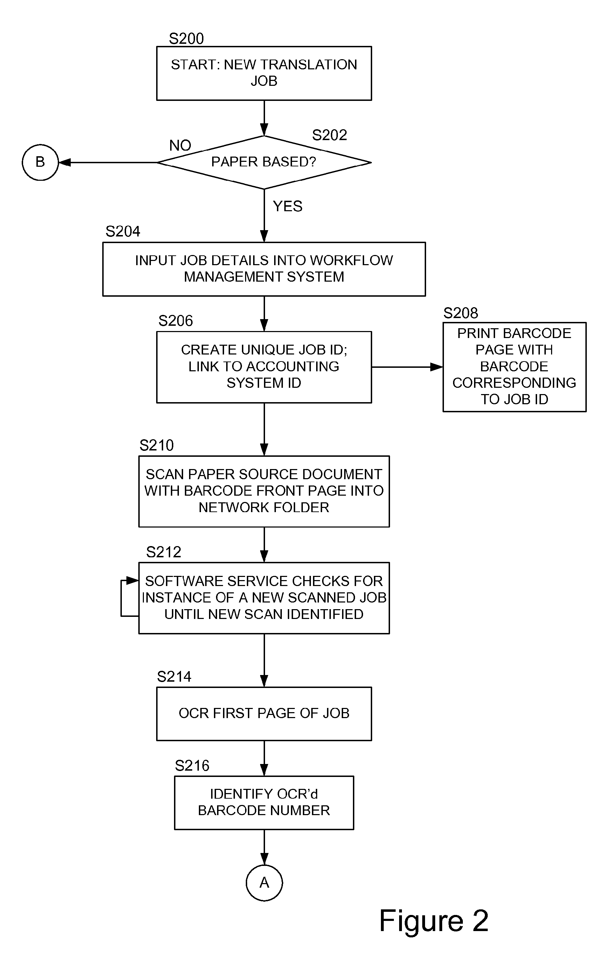

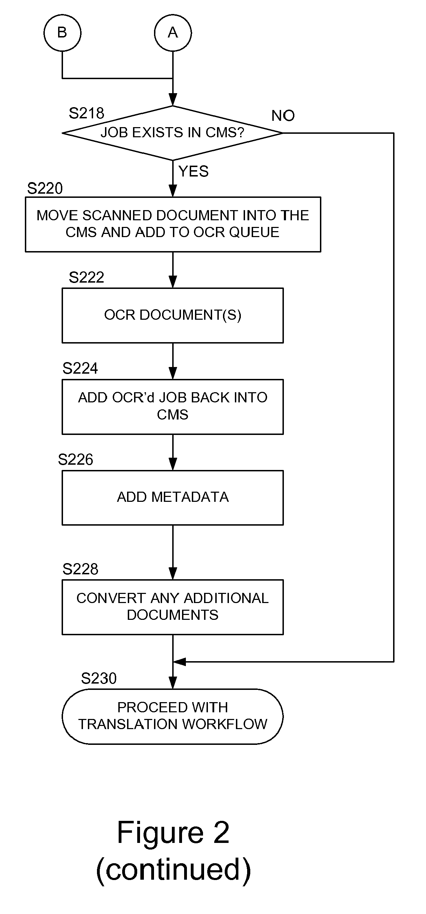

The operation of the various elements of the system of figure 1 is illustrated by the flow diagram of figure 2. Thus when a new translation job is received (S200) and manually identified as being paper-based (S202), details for the new job are entered into the workflow management system (S204) which creates a placeholder or "Master" job with an associated unique identification code, and a corresponding barcode; a Master job is also created by the workflow management system for accounting system [106] (S206).

A barcode page with a barcode corresponding to the job ID (Master job) is printed by barcode printer [112] (S208) and included as the first page of the paper document. The entire paper document is then scanned (S210) by document imaging system [114] and the scanned document is saved into network storage [118]. The system operates under control of control system [112], which provides a software service (S212) which checks for an instance of a new scanned job (S212) and, when a new job is found, OCR's the first page (S214) which should contain a barcode. Preferably the optical character recognition software employed is able to read and retrieve a barcode code as well as text and thus the system is able to identify (S216) the OCR'd barcode number. This number is then checked using the workflow management system [102] (S218) to determine whether a job ID corresponding to that barcode exists. If so, the control system moves the entire scanned document (and any other associated documents) into the content management system [104] (S220), storing them against the unique "source language" and master job identifier created at the job's inception. The documents are then OCR'd (S222) and added back into the content management system in searchable form (S224), in particular to facilitate operation of the computer assisted translation system [102d]. Any additional metadata associated with the job, for example further details of the job, may now be manually entered into the workflow management system [102] in association with the job identifier (S226) and any additional documents associated with the job are converted into a common format, for example PDF, and similarly added into the workflow management system/content management system linked to the unique job identifier (S228). At this stage the additional documents may be queued for scanning (if paper) and/or conversion of TIF format to PDF (image) format and/or OCR from PDF (image) format to PDF (text) format. The translation workflow may then proceed, under management of system [102] adding in additional documents to the content management system [104] as the translation is carried out and, in particular, generating a (searchable) PDF target document containing the translated text.

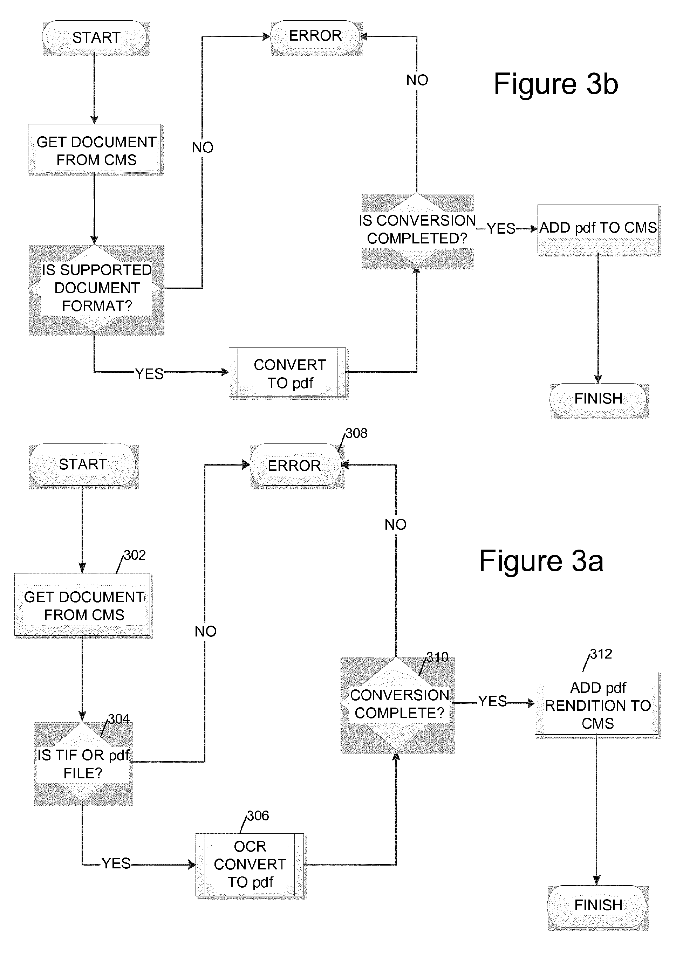

Figure 3a shows an OCR procedure used in the system of figure 1. At step 302 a document is retrieved from content management system [104] and provided this is in either TIF or PDF format [304] the document is converted to PDF format as necessary and OCR'd [306] or an error is flagged [308]. Once conversion is complete [310] the searchable PDF document is added back into the content management system [312]. Figure 3b illustrates a procedure for converting an input format (for example PNG, BMP, WMF, JPG, TIF, DOC, DOCX, XLS, XLSX, TXT, HTML) into PDF format for storage in the CMS [104].

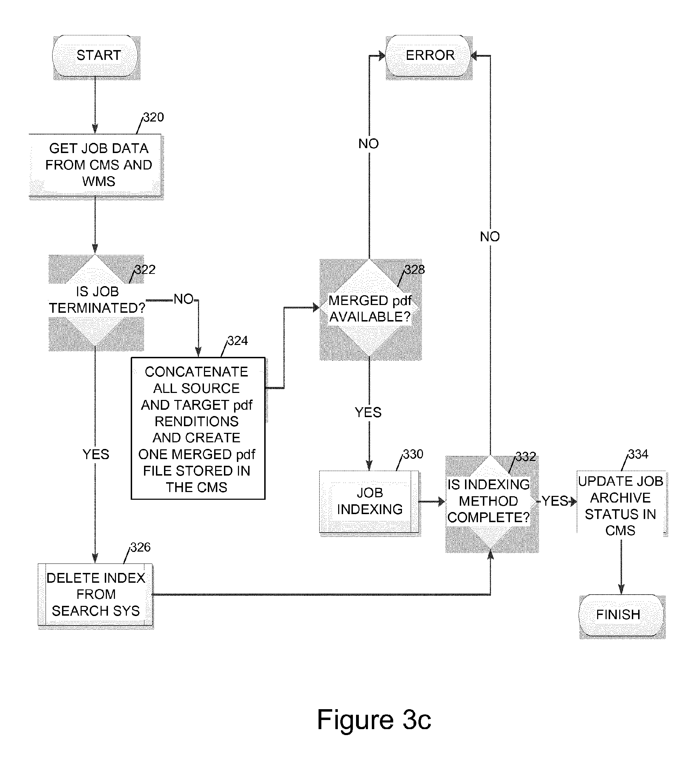

Preferably all documents associated with the job, for example, tickets, correspondence, and miscellaneous other items are stored in a common, PDF format. Source and target documents employ searchable PDF format and are automatically indexed by indexing system [120]. Thus in figure 3c job data is retrieved from CMS [104] and WMS [102] [320] and, providing the job is not terminated [322] the source and target PDF renditions are concatenated to create one merged PDF file which is stored in CMS [104] [324], otherwise the job is deleted from the index [326]. When the merged PDF file is available [328] the search system (which employs a REST - representational state transfer - interface) indexes the job [330] and when the method is complete [332] updates the job archive status in CMS [104] accordingly [334].

Broadly speaking, therefore, we have described a system which enables a paper-based source document for translation to be automatically tracked, OCR'd, and monitored in a translation process whilst retaining links at all times with the content/document management system (and also the accounting system). The paper-based source document is automatically prepared for implementation of a computer assisted translation procedure, and indexed and automatically archived in a form where a searchable PDF of the original paper document and of the translated document can be viewed together to facilitate analysing the translation, checking translation units and the like.

No doubt many other effective alternatives will occur to the skilled person. It will be understood that the invention is not limited to the described embodiments and encompasses modifications apparent to those skilled in the art lying within the spirit and scope of the claims appended hereto.

## Claims

1. A physical document translation management computer system, the system comprising:
a document translation workflow management computer system to track and manage translation of electronic documents including identifying electronic source documents for translation and electronic target documents comprising translated text, allocating translation jobs, and scheduling;
a document content management system coupled to said document translation workflow management computer system for storing said electronic source documents for translation and said electronic target documents;
a network file system, coupled to said document translation workflow management computer system and to said document content management system, for temporarily storing images of incoming paper source documents for translation;
a barcode printing system coupled to said document translation workflow management computer system to print a physical barcode page including a barcode;
a document imaging system coupled to said network file system to scan a paper copy of a source document for translation and save said scanned source document to said network file system, wherein a said barcode page provides a first page of said paper copy of said source document for translation;
an optical character recognition (OCR) system, coupled to said network file system, to perform OCR on a said scanned source document to generate a searchable portable document format version of said scanned source document;
a control system, coupled to said document translation workflow management computer system, to said document content management system, to said network file system, and to said optical character recognition system, wherein said control system is configured to control said OCR system to load and OCR said first page of said scanned source document for translation, to read the barcode from the barcode page to determine whether said barcode matches an electronic job identification code of said document translation workflow management computer system, and to interface with said document content management system and said OCR system to add a said scanned source document into said document content management system and to convert said scanned source document into a searchable portable document format version of said scanned source document;
wherein said physical document translation management computer system is configured to:
create a unique electronic job identification code;
create and print a barcode representing said electronic job identification code;
scan a paper copy of a source document for translation using document imaging system;
analyse said scanned source document bearing a said barcode on the first page to read the barcode;
test said read barcode to determine whether said read barcode matches a said unique electronic job identification code;
add said scanned source document to said document content management system, indexed by said unique electronic job identification code, if said read barcode matches a said unique electronic job identification code;
convert said scanned source document indexed by said unique electronic job identification code in said document content management system into a searchable portable document format version of said scanned source document using said optical character recognition system; and
store said searchable portable document format version of said paper source document for translation and said scanned paper source document for translation in said document content management system indexed by said unique electronic job identification code.

2. A physical document translation management system as claimed in claim 1 further comprising an automatic indexing system coupled to said document translation workflow management computer system and to said document content management system, for indexing said electronic source and target documents for a said electronic job identification code, wherein the physical document translation management system is further configured to merge associated said electronic source and target documents into a single merged document and index said merged documents using said automatic indexing system.

3. A physical document translation management system as claimed in claim 2 wherein said system is further configured to automatically convert additional documents for said document translation workflow management computer system into PDF format indexed by said unique electronic job identification code.

4. A method of processing paper source documents for translation using a document translation workflow management computer system configured to handle electronic documents, the method comprising:
creating a unique electronic job identification code using said document translation workflow management computer system;
printing a barcode page bearing a barcode representing said electronic job identification code;
providing said barcode page as a first page of a paper source document for translation;
scanning said paper source document for translation;
performing OCR on a first page of said scanned paper source document for translation to provide a searchable portable document format (pdf) version of said first page;
reading said barcode from said searchable pdf version of said first page;
checking whether there exists in said document translation workflow management computer system a unique electronic job identification code represented by said barcode;
matching said scanned paper source document for translation to said electronic job identification code if said a unique electronic job identification code represented by said barcode text exists;
converting all said paper source document for translation to a searchable pdf version of said paper source document for translation; and
storing said searchable pdf version of said paper source document for translation and said scanned paper source document for translation in a content management system in association with said matched electronic job identification code.
